# EUROPÄISCHE PATENTSCHRIFT

(11) **EP 0 895 067 B1**
(45) Veröffentlichungstag und Bekanntmachung des Hinweises auf die Patenterteilung: **16.08.2001**
(21) Anmeldenummer: 97121069.5
(22) Anmeldetag: 01.12.1997
(51) Int. Cl.: G01F 3/08

(54) **Ringkolbenzähler**
Ring piston flow meter
Débitmètre à piston rotatif

(30) Priorität: 01.08.1997 DE 29713705 U
(43) Veröffentlichungstag der Anmeldung: 03.02.1999
(73) Patentinhaber: SPANNER-POLLUX GmbH, D-67063 Ludwigshafen (DE)
(72) Erfinder: Lang, Gerhard, 67134 Birkenheide (DE)
(74) Vertreter: Patentanwälte Möll und Bitterich

(56) Entgegenhaltungen:
- EP-A- 0 681 163
- DE-A- 2 703 549
- DE-A- 2 807 108
- DE-U- 9 000 958
- US-A- 1 999 684

## Beschreibung

Die Erfindung betrifft Ringkolbenzähler gemäß dem Oberbegriff des Anspruchs 1.

Ringkolbenzähler, die zu den unmittelbaren Volumenzähler zählen, besitzen eine Meßkammer, die zwangsläufig von der gesamten Flüssigkeitsmenge durchströmt wird. Dabei geht ein Teil der potentiellen Energie des zu messenden Wassers für den Antrieb des Zählers verloren. Der hierbei entstehende Druckabfall wird als Druckverlust p bezeichnet. Er entsteht durch Wasserumlenkungen, Querschnittsänderungen längs des Strömungsweges, den Antrieb des Ringkolbens usw.

In der Meßkammer befindet sich der Ringkolben, der während des Meßvorgangs von der Hochdruck- auf die Niederdruckseite geschoben wird. Dies geschieht selbsttätig durch den Wasserstrom, der in der Meßkammer fortlaufend in Meßkammerfüllungen zerlegt wird. Bei einer Umdrehung des Ringkolbens werden zwei verschiedene Volumina von gleichbleibender und bestimmter Größe transportiert. Hierbei bewegt sich der Ringkolben mit seinem unteren Kolbenzapfen um den Mittelzapfen der Meßkammer.

Der Mantel des Ringkolbens ist über seine gesamte Höhe geschlitzt. Dieser Schlitz bewegt sich bei jeder Ringkolbenumdrehung einmal hin- und hergehend entlang einer Trennwand in der Meßkammer. Die oszillierende Bewegung hat den Vorteil der selbsttätigen Rückkehr des Ringkolbens in seine Ausgangsstellung ohne Hilfe von zusätzlichen Umsteuereinrichtungen, Ventilen, Schiebern usw. Durch die innere und äußere Kolbenführung ist die Bewegung des Ringkolbens zwangsläufig.

Vom oberen Kolbenzapfen des Ringkolbens wird ein Mitnehmer angetrieben, der die kreisenden Bewegungen des Zapfens auf ein Zählwerk überträgt.

Die Meßgenauigkeit des Ringkolbenzählers hängt weitgehend von der Maßhaltigkeit der Meßkammerteile ab. Je kleiner die Spalte zwischen Ringkolben und Meßkammer, um so weniger Flüssigkeit kann ungemessen passieren und um so kleiner wird der Meßfehler. Aus funktionstechnischen Gründen muß allerdings ein Mindestspiel zwischen Ringkolben und Meßkammer vorhanden sein, damit der Ringkolben nicht klemmt. Typische Werte für die Spalte zwischen den sich bewegenden Teilen sind kleiner/gleich 10 *µ*m.

Oftmals enthält die zu messende Flüssigkeit Schmutzpartikel, beispielsweise Rost, Sand und dergleichen im Falle von Trinkwasser. Oftmals scheiden sich aus der Flüssigkeit auch Salze aus, beispielsweise Kalk aus dem Trinkwasser. In aller Regel passieren diese Fremdstoffe den Ringkolbenzähler problemlos. Hin und wieder kann es jedoch vorkommen, daß diese Partikel in den minimalen Funktionsspalt zwischen Meßkammerwand und Kolbenwand gelangen.

Sitzen die Schmutzpartikel lose, werden sie von der Ringkolbenwand zur Auslaßöffnung geschoben und verlassen die Meßkammer, ohne Schaden anzurichten. Dabei wird die Bewegung des Ringkolbens nur geringfügig verzögert, die Meßgenauigkeit nicht dauerhaft beeinträchtigt.

Sitzen die Schmutzpartikel fest, so können sie den Ringkolben blockieren. Der Zähler fällt aus.

Schließlich besteht noch die Möglichkeit, daß der Ringkolben sich an den Schmutzpartikeln reibt. Dabei entstehen in den Wänden des Ringkolbens bzw. der Meßkammer Kratzer, die den effektiven Spalt zwischen Meßkammer und Ringkolben vergrößern. Der Ringkolbenzähler fällt dabei nicht aus, seine Meßgenauigkeit nimmt jedoch dauerhaft ab.

Der vorliegenden Erfindung liegt nun die Aufgabe zugrunde, die gattungsgemäßen Ringkolbenzähler derart zu verbessern, daß das Blockieren des Ringkolbens verhindert und die Beschädigung der Wände von Ringkolben und Meßkammer deutlich reduziert werden kann.

Diese Aufgabe wird gelöst durch einen Ringkolbenzähler mit den Merkmalen des Anspruchs 1.

Dank der vorliegenden Erfindung kann der Ringkolben kurzzeitig von der Wand der Meßkammer abheben. Dadurch wird ein Blockieren des Kolbens vermieden, in den meisten Fällen auch das Entstehen von Kratzern in den Wänden des Ringkolbens bzw. der Meßkammer. Selbst bei ungünstigen Bedingungen wird die Meßgenauigkeit allenfalls kurzfristig verringert.

Die erfindungsgemäße Ausbildung des Ringkolbenzählers hat darüber hinaus aber auch den Vorteil, daß die Einsatzdauer des Zählers steigt. Es ist eine bekannte Tatsache, daß Mittelzapfen und Kolbenzapfen sich im Betrieb einseitig verstärkt abnutzen, bedingt durch die bekanntermaßen ungleichförmigen Befüllungs- und Entleerungsvorgänge. Dank der elastisch nachgiebigen Ausgestaltung der Zapfen werden auch diese periodischen Kräfte elastisch aufgefangen und schadlos abgefedert.

Gemäß einer vorteilhaften Weiterbildung der Erfindung sind der Mittelzapfen und/oder der Kolbenzapfen als dünnwandiger Zylinder ausgebildet.

Es versteht sich, daß der elastisch nachgiebige Zapfen aus einem zäh-elastischen Kunststoff hergestellt wird.

Anhand der Zeichnung soll die Erfindung in Form eines Ausführungsbeispiels näher erläutert werden. Es zeigen
- Fig. 1: eine Draufsicht auf einen Ringkolbenzähler herkömmlicher Bauart bei abgenommenem Meßkammerdeckel und
- Fig. 2: einen Ausschnitt aus dem Ringkolbenzähler der Fig. 1 in stark vergrößertem Maßstab.

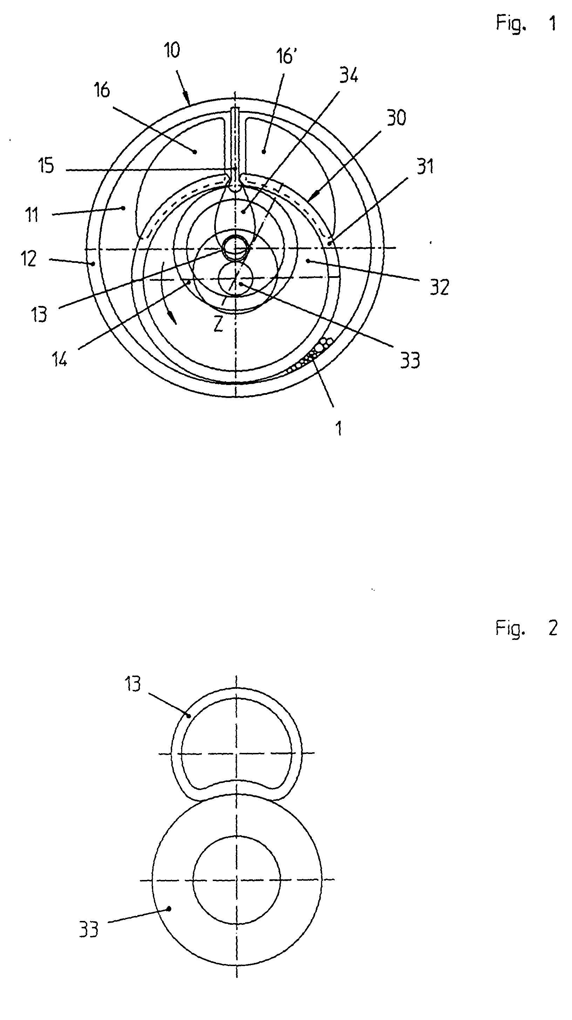

Fig. 1 zeigt als Draufsicht die für die Erläuterung der Erfindung erforderlichen Teile eines Ringkolbenzählers.

Man erkennt zunächst eine Meßkammer 10 mit einem Boden 11, einem zylindrischen Meßkammermantel 12, einem Mittelzapfen 13, einem Führungsring 14 und einer radialen Trennwand 15. Links neben der Trennwand 15 erkennt man eine sichelförmige Einlaßöffnung 16, rechts der Trennwand eine ebenfalls sichelförmige Auslaßöffnung 16' für das zu messende Wasser.

Im Inneren der Meßkammer 10 erkennt man einen Ringkolben 30, gebildet aus einem zylindrischen Kolbenmantel 31, einem Kolbenboden 32 und einem Führungszapfen 33. Der Führungszapfen 33 bewegt sich in einer Kreisbahn um den Mittelzapfen 13.

In Kolbenmantel 31 und Kolbenboden 32 ist ein radialer Schlitz 34 eingearbeitet, dank dessen der Ringkolben 30 auf die Trennwand 15 aufgesteckt werden kann. Durch die von der Trennwand 15 bewirkte Geradführung in Kombination mit der durch Mittelzapfen 13 und Führungsring 14 bewirkten Kreisführung führt der Ringkolben 30 die bekannte oszillierende Bewegung aus.

Befinden sich in dem minimalen Funktionsspalt zwischen Meßkammermantel 12 und Ringkolbenmantel 31 Schmutzpartikel 1, so kommt es zu Störungen der Ringkolbenbewegung bis hin zum völligen Blockieren. Um eine solche Blockade zu vermeiden, ist der Mittelzapfen 13 elastisch nachgiebig gestaltet. Wie Fig. 2 in stark vergrößertem Maßstab erkennen läßt, ist der Mittelzapfen 13 als dünnwandiger Zylinder ausgebildet und besteht aus einem zäh-elastischen Kunststoff. Jetzt kann sich der Mittelzapfen 13 elastisch verformen und der Ringkolben 30 den Schmutzpartikeln 1 elastisch nachgiebig ausweichen.

Das Ausweichen funktioniert genauso, wenn der Kolbenzapfen 33 elastisch nachgiebig ausgebildet ist.

## Patentansprüche

1. Ringkolbenzähler, umfassend
- eine Meßkammer (10) mit
-- einem Boden (11),
-- einem zylindrischen Meßkammermantel (12),
-- einem Deckel,
-- einem Mittelzapfen (13),
-- einem Führungsring (14),
-- einer Trennwand (15),
-- einer Einlaßöffnung (16)
-- und einer Auslaßöffnung (16') für die zu messende Flüssigkeit,
- und einen Ringkolben (30) mit
-- einem zylindrischen Kolbenmantel (31),
-- einem Kolbenboden (32),
-- einem oberen und unteren Kolbenzapfen (33)
-- und einem Führungsschlitz (34) im Kolbenmantel (31) und im Zwischenboden (32), passend zu der Trennwand (15),
gekennzeichnet durch das Merkmal:
- der Mittelzapfen (13) und/oder der Kolbenzapfen (33) sind elastisch nachgiebig.

2. Ringkolbenzähler nach Anspruch 1, gekennzeichnet durch das Merkmal:
- der Mittelzapfen (13) und/oder der Kolbenzapfen (33) sind als dünnwandiger Zylinder ausgebildet.

3. Ringkolbenzähler nach Anspruch 1 oder 2, gekennzeichnet durch das Merkmal:
- Mittelzapfen (13) und/oder Kolbenzapfen (33) bestehen aus einem zähelastischen Kunststoffmaterial.

## Claims

1. An oscillating-piston meter, comprising
- a measuring chamber (10) with
-- a base (11),
-- a cylindrical measuring chamber housing (12),
-- a cover,
-- a central journal (13),
-- a guide ring (14),
-- a separating wall (15),
-- an inlet opening (16)
-- and an outlet opening (16') for the liquid to be measured,
- and a cylindrical piston (30) with
-- a cylindrical piston housing (31),
-- a piston base (32),
-- an upper and lower piston pin (33)
-- and a guide slot (34) in the piston housing (31) and in the intermediate base (32), fitting the separating wall (15),
characterised by the feature:
- the central journal (13) and/or the piston pin (33) are elastically flexible.

2. A cylindrical-piston meter according to Claim 1, characterised by the feature:
- central journal (13) and/or the piston pin (33) are in the form of a thin-walled cylinder.

3. A cylindrical-piston meter according to Claim 1 or 2, characterised by the feature:
- the central journal (13) and/or the piston pin (33) consist of a tough plastics material.

## Revendications

1. Débit mètre à piston rotatif, comprenant :
- une chambre de mesure (10) avec
-- un fond (11),
-- une enveloppe cylindrique (12) pour la chambre de mesure,
-- un chapeau,
-- un tourillon central (13),
-- une bague de guidage (14),
-- une paroi de séparation (15)
-- un orifice d'entrée (16),
-- et un orifice de sortie (16') pour le liquide à mesurer
- et un piston annulaire (30), avec
-- un corps de piston cylindrique (31),
-- un fond de piston (32),
-- un tourillon de piston (33) supérieur et
-- et une rainure de guidage (34) dans le corps de piston (31) et dans le fond intermédiaire (32) adaptée à la paroi de séparation (15),
caractérisé en ce que le tourillon central (13)et/ou le tourillon de piston (33) sont élastiquement déformables.

2. Débit mètre à piston rotatif selon la revendication 1, caractérisé en ce que le tourillon central (13) et/ou le tourillon de piston (33) sont conçus comme des cylindres à paroi mince.

3. Débit mètre à piston rotatif selon la revendication 1 ou 2, caractérisé en ce que le tourillon central (13) et/ou le tourillon (33) sont composés d'une matière plastique viscoélastique.
